## Europäisches Patentamt
## European Patent Office
## Office européen des brevets

(19)

(11) Numéro de publication : **0 116 244**
**B1**

(12)

# FASCICULE DE BREVET EUROPÉEN

(45) Date de publication du fascicule du brevet :
09.09.87

(51) Int. Cl.⁴ : **G 01 V   1/40**

(21) Numéro de dépôt : **83402397.0**

(22) Date de dépôt : **13.12.83**

(54) **Méthode et appareillage de détection des fractures par échographie ultrasonique le long de la paroi d'un matériau ou d'une formation.**

(30) Priorité : **27.12.82 FR 8221831**

(43) Date de publication de la demande :
**22.08.84 Bulletin 84/34**

(45) Mention de la délivrance du brevet :
**09.09.87 Bulletin 87/37**

(84) Etats contractants désignés :
**DE GB IT**

(56) Documents cités :
**FR-A- 2 486 997**
**US-A- 3 356 177**
**US-A- 3 511 334**
**US-A- 3 688 569**
**US-A- 4 168 483**

(73) Titulaire : **INSTITUT FRANCAIS DU PETROLE**
**4, Avenue de Bois-Préau**
**F-92502 Rueil-Malmaison (FR)**

(72) Inventeur : **Norel, Guy**
**39, avenue Auguste Ducreux**
**F-78170 La Celle Saint Cloud (FR)**

EP 0 116 244 B1

## Description

La présente invention concerne une méthode et un appareillage pour détecter et localiser les fractures naturelles ou provoquées le long de la paroi d'un matériau et plus particulièrement d'une formation géologique traversée par un sondage, cette dernière application étant plus particulièrement étudiée, à titre d'exemple seulement, dans ce qui suit.

La détection des fractures dans la paroi d'un sondage est effectuée actuellement en utilisant l'une au moins des méthodes suivantes :

la détection des pertes de boue,

l'interprétation et la mise en corrélation des mesures de porosité, en particulier, la mise en corrélation des mesures de porosité données par la diagraphie sonique basse fréquence (20 kHz) et la diagraphie neutrons,

l'interprétation de certaines mesures de résistivité électrique des couches (pendagemétrie à résistivité, par exemple),

l'interprétation des anomalies des signaux fournis par la diagraphie sonique ou par la diagraphie microsonique (300 kHz). Toutefois, ces deux diagraphies utilisent la transmission d'une onde sonique à travers des couches d'épaisseur variable (de 15 cm à 90 cm) et la variation des amplitudes du signal reçu est tributaire non seulement de la présence d'éventuelles fractures,

mais aussi de nombreux autres paramètres (porosité, vitesses longitudinale et transversale, angles d'incidence d'entrée et de retour, intercalations...) de telle sorte que l'interprétation de ces diagraphies est complexe et ne fournit qu'une indication indirecte.

On a déjà proposé dans le brevet britannique GB-A-1 031 200 une méthode selon laquelle on émet des impulsions ultra-soniques dans un puits rempli de liquide suivant une direction sensiblement perpendiculaire à l'axe du puits et on reçoit les impulsions réfléchies suivant la direction d'émission.

Il est indiqué dans ce brevet que les amplitudes et formes des ondes réfléchies peuvent notamment fournir des indications sur l'existence et la position de fissures dans la paroi du puits.

Ce brevet ne donne cependant aucune autre précision sur la manière dont ces fissures pourraient être décelées et ne décrit aucun agencement permettant d'obtenir une résolution suffisante dans la détection des fractures.

On a également décrit dans le brevet US-A-3 175 639 une méthode de diagraphie comportant aussi l'émission d'impulsions ultra-soniques dans une direction sensiblement perpendiculaire à l'axe d'un puits et la réception des impulsions ultra-soniques réfléchies suivant la direction d'émission, en utilisant un transducteur ultra-sonique appliqué directement au contact du gâteau de boue recouvrant la paroi du puits, ou séparé de ce gâteau par une épaisseur de boue s connue.

Cette méthode a cependant pour but de déterminer la porosité et la perméabilité des formations géologiques entourant un sondage et s'intéresse à l'interface entre le gâteau de boue recouvrant la paroi du puits, et les formations envahies par l'eau au voisinage de la paroi du puits. Cette méthode antérieure utilisant une fréquence d'émission de l'ordre de 10 MHz est basée sur la détermination de l'impédance acoustique de la zone envahie par l'eau et n'est nullement adaptée à une détection précise des fractures de la paroi du puits.

On connaît aussi par les brevets US-A-3 511 334 et US-A-3 369 626 un outil de diagraphie comportant un organe rotatif écarté de la paroi émettant et recevant à travers un milieu intermédiaire des signaux ultra-soniques formant un faisceau de faible angle d'ouverture d'une fréquence de l'ordre de 1 à 2 MHz, perpendiculairement à l'interface étudié. Les signaux réfléchis modulent en intensité le faisceau d'un oscilloscope, l'absence de signal réfléchi en réponse à un signal acoustique émis traduisant l'existence d'une anomalie dans la paroi du puits.

Un tel outil de diagraphie présente l'inconvénient d'être en pratique très sensible aux variations de diamètre d'un sondage, car il utilise un ensemble émetteur rotatif placé suivant l'axe du sondage, c'est-à-dire loin de la paroi. La durée séparant l'émission de la réception dépend donc des variations de diamètre du sondage et est affectée par les défauts de centrage de l'organe émetteur-récepteur. Par ailleurs, la fixation de cet organe à une partie métallique vibrante du corps de sonde est la cause d'un important bruit de fond qui perturbe les mesures.

Enfin, la surface active du transducteur tournée vers la paroi du sondage est recouverte d'une résine époxy créant une rupture d'impédance acoustique et causant par suite des échos multiples à la réception.

L'existence de cette couche époxy dont l'impédance acoustique n'est pas adaptée à celle du fluide contenu dans le puits (boue de forage) réduit l'intensité acoustique émise vers la paroi du puits.

On connaît également par la demande de brevet français FR-A-2 486 997 une méthode de pendage qui utilise des variations d'amplitudes d'échos apparaissant à des intervalles de temps correspondant à la différence entre l'instant d'émission et l'instant de réception des signaux et des corrélations de ces amplitudes. L'appareillage comprend un corps d'outil adapté à positionner, à proximité immédiate de la paroi d'un matériau ou d'une formation à étudier, un transducteur adapté à émettre et recevoir un faisceau de faible angle d'ouverture suivant une même direction sensiblement perpendiculaire à la paroi, en délimitant entre le transducteur et la paroi un espace ayant une faible épaisseur connue et contenant un milieu intermédiaire.

Enfin, l'art antérieur peut être illustré par les

brevets US-A-3 356 177 et US-A-4 168 483 qui mettent en œuvre un émetteur et un récepteur distants l'un de l'autre et le brevet US-A-3 688 569 qui met en œuvre un organe émettant des signaux suivant une direction non perpendiculaire à la surface à examiner.

La présente invention a pour but de fournir une mise en évidence directe des fractures avec une résolution très fine (de l'ordre du millimètre par exemple) et sans qu'il soit nécessaire d'avoir recours à des corrélations aléatoires avec d'autres diagraphies. Pour cela, on utilise au moins un transducteur (c'est-à-dire un organe émetteur-récepteur) de signaux ultra-soniques, donnant par réflexion sur la paroi du puits un signal réfléchi important si la formation n'est pas altérée et aucun écho s'il y a fracture.

La méthode selon l'invention (telle que définie dans la revendication 1) utilisant l'émission et la réception d'un faisceau de faible angle d'ouverture de signaux ultra-soniques, est notamment caractérisée en ce qu'on effectue l'émission et la réception dudit faisceau à proximité immédiate de la paroi, à travers une faible épaisseur e de valeur connue d'un milieu intermédiaire ne formant aucun interface distinct de ladite paroi qui soit capable de produire une réflexion parasite sensible des signaux ultra-soniques émis, et on détecte la réception éventuelle des signaux ultra-soniques réfléchis par la paroi sensiblement suivant la direction d'émission durant au moins un intervalle de temps limité F1 qui débute lorsque s'est écoulée depuis l'instant d'émission des signaux ultra-soniques une durée sensiblement égale à la durée du trajet aller et retour des signaux ultra-soniques à travers ladite épaisseur du milieu intermédiaire, la réception des signaux ultra-soniques pendant ledit intervalle de détection F1 correspondant à l'absence de fractures dans la paroi du matériau ou de la formation et le défaut de réception des signaux ultra-soniques pendant ledit intervalle de temps F1 correspondant à la présence des fractures ou des alvéoles dans la paroi en regard du point d'émission.

On effectuera de préférence un raclage de la paroi avant d'émettre les signaux ultra-soniques vers celle-ci, notamment lorsque la méthode selon l'invention est appliquée à la détermination des fractures de la paroi d'un sondage traversant des formations géologiques.

Ce raclage qui, dans l'application envisagée ci-dessus, pourra, par exemple, être effectué au moyen d'un outil d'alésage ou de ramonage d'un type connu, tel qu'un carottier ou un trépan, présente l'avantage d'enlever de la paroi des dépôts ou irrégularités qui créeraient des anomalies d'enregistrement, autres que celles dues aux fractures.

Le milieu intermédiaire utilisé pour appliquer la méthode selon l'invention sera choisi de manière à correspondre à une atténuation faible des ondes acoustiques. Ce milieu pourra, par exemple, être l'eau ou/et un matériau solide ou liquide dont l'impédance acoustique a sensiblement même valeur que celle de l'eau comme certains caoutchoucs ou polymères (polyéthylène par exemple). On rappelle que l'impédance acoustique d'un matériau est égale au produit de sa masse spécifique par la vitesse de propagation du son dans ce matériau. L'onde acoustique émise pourra avoir une fréquence comprise entre 400 Kilohertz et 5 Mégahertz.

L'invention se réfère aussi à un appareillage tel que défini dans la revendication 8.

L'invention pourra être bien comprise à la lecture de la description qui suit, illustrée par les figures annexées où :

La figure 1 montre un schéma général d'une sonde ultra-sonique mettant en œuvre la méthode selon l'invention,

la figure 2 représente une coupe d'un patin de détection, avec son transducteur incorporé, au contact de la formation,

les figures 3A, 3B et 3C sont des schémas de principe illustrant la méthode selon l'invention,

les figures 4A, 4B et 4C montrent les différents types de signaux fournis par la sonde,

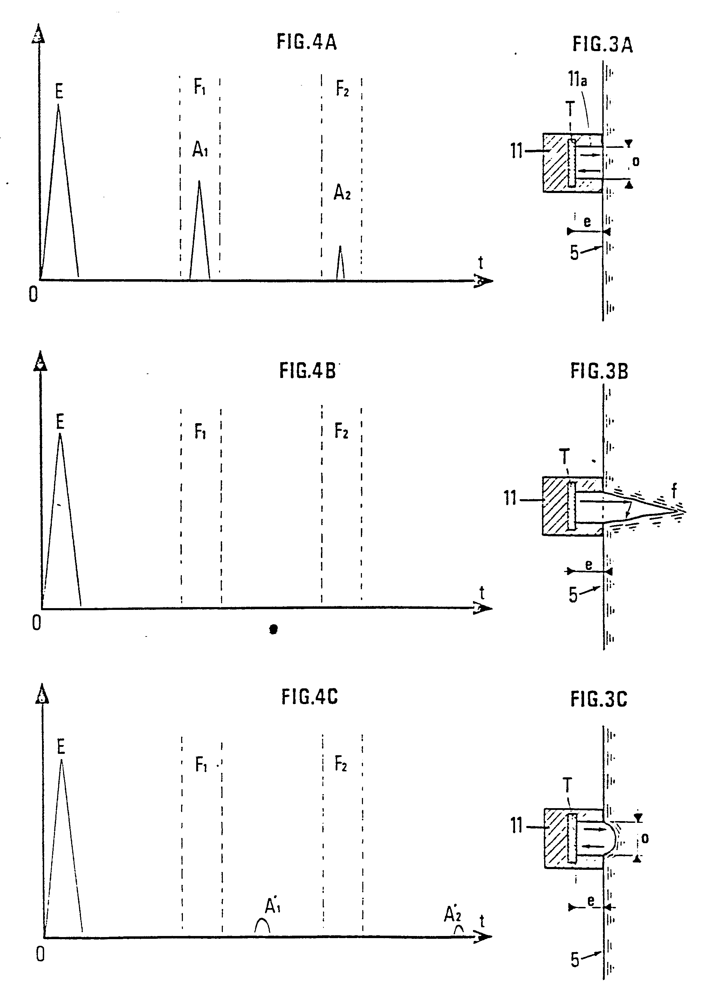

la figure 4A correspond au cas où la formation est compacte,

la figure 4B illustre le cas d'une formation fracturée, et

la figure 4C montre le signal reçu lorsque la paroi de la formation est alvéolée,

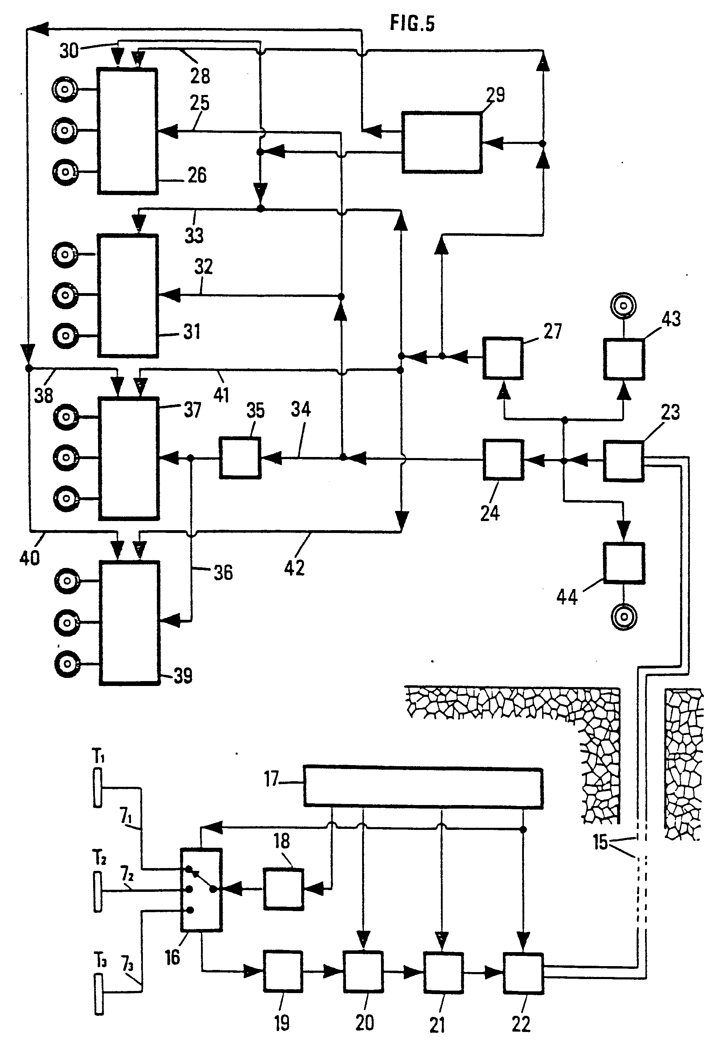

la figure 5 représente schématiquement les circuits d'émission, de réception et de traitement des signaux.

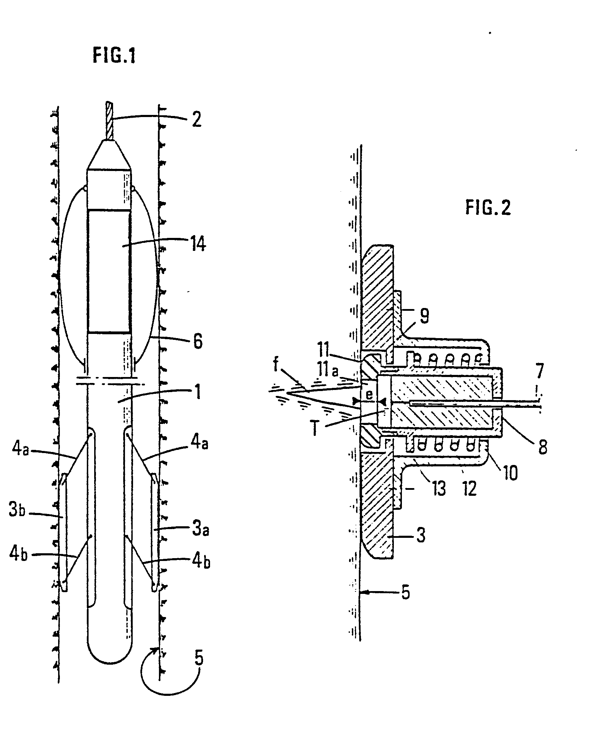

Sur la figure 1, la référence 1 désigne le corps d'outil ou corps de sonde suspendu à l'extrémité d'un câble de manœuvre 2, dans lequel peuvent être incorporés des conducteurs électriques transmettant à la sonde l'énergie nécessaire à son fonctionnement et transmettant, en surface, les signaux délivrés par la sonde.

Le corps de sonde 1 est, par exemple, pourvu de quatre patins de mesure, diamétralement opposés deux à deux et appliqués contre la paroi. Deux seulement de ces patins sont représentés en 3A et 3B. Ils sont reliés au corps de sonde par un mécanisme non représenté en détail, comportant des bras articulés 4a et 4b pour déplacer les patins par rapport à l'axe du corps de sonde, et les mettre en contact avec la paroi 5 du puits lors des mesures. Le corps de sonde 1 est également équipé d'un dispositif de centrage 6.

Sommairement, et comme le montre la figure 2, chaque patin 3 comporte un transducteur T émetteur-récepteur d'ondes acoustiques, du type piézoélectrique qui, à la réception d'un signal électrique transmis par le conducteur 7, émet une impulsion acoustique et qui, à la réception d'une impulsion acoustique délivre un signal électrique transmis par le conducteur 7. Le diagramme d'émission et de réception du transducteur T est choisi très directif. De plus, ce transducteur est placé à proximité immédiate de la paroi. Il émet un faisceau très directionnel dans une direction sensiblement perpendiculaire à l'axe de la sonde et reçoit les ondes acoustiques qui se réfléchissent perpendiculairement à l'axe de la sonde.

Le transducteur T est porté par un boîtier 8, placé dans un alésage 9 du patin de mesure 3, cet alésage s'ouvrant vers la paroi 5 du puits, le boîtier 8 étant monté coulissant dans un élément en forme de couvercle 10 fixé sur l'autre face du patin 3.

Le boîtier 8 est appliqué élastiquement contre la paroi du sondage. Le contact avec cette paroi est établi par une bague 11, en matière plastique de préférence, d'épaisseur e choisie, de telle sorte que la durée du trajet des trains d'ondes acoustiques dans l'évidement 11a rempli d'eau ou d'un matériau ayant sensiblement la même impédance acoustique, qui constitue un milieu intermédiaire compris entre le transducteur T et la paroi 5, soit bien connue.

La résolution obtenue sera d'autant meilleure que le diamètre ou ouverture O du collimateur constitué par l'évidement 11a sera plus faible. Cette ouverture sera cependant suffisante pour éviter que le diaphragme n'atténue sensiblement le faisceau acoustique émis. Par ailleurs, on sait que l'angle d'ouverture du faisceau d'ondes acoustiques émis diminue lorsqu'on augmente la fréquence d'émission. La valeur de l'épaisseur e est prise en compte pour déterminer les positions des fenêtres temporelles ou intervalles limités de temps de détection F1 et F2 dans lesquelles on détecte les échos successifs A1, A2... du signal ultra-sonique E émis (figures 3A, 3B et 3C) où le temps t apparaît en abscisses.

Ces fenêtres correspondent aux instants de réception des réflexions successives du signal E sur l'interface entre la paroi 5 et l'eau contenue dans l'évidement 11a. Des moyens élastiques 12, tels qu'un ressort, interposés entre le fond du logement 9 et un épaulement 13 du boîtier 8, maintiennent la bague 11 en contact avec la paroi 5 du puits en déplaçant le boîtier 8 perpendiculairement à l'axe de la sonde.

L'épaisseur e définit la distance moyenne entre l'élément d'émission T et la paroi 5. Cette épaisseur sera choisie suffisante pour que la fenêtre F1 soit assez écartée de l'instant d'émission pour permettre de bien séparer le signal A1 du signal émis E (figure 4A), l'épaisseur e étant cependant limitée pour éviter une trop forte atténuation des signaux acoustiques par le milieu intermédiaire, compte tenu de la valeur de la puissance d'émission du transducteur acoustique E.

D'excellents résultats sont obtenus en pratique avec des valeurs de e allant de quelques millimètres à 1 centimètre, sans que ces valeurs puissent être considérées comme limitatives.

La sonde est également pourvue d'un dispositif diamétreur 14 qui indique la valeur du diamètre du forage au niveau où la bague 11 jouant le rôle de palpeur est en contact avec la paroi interne 5 du sondage. Un tel dispositif, bien connu de l'art antérieur, n'a pas besoin d'être décrit en détail. Par exemple, ce dispositif indique la valeur du diamètre du trou en tenant compte de la rotation des bras articulés 4a et 4b, et peut notamment servir à déceler la présence de cavités importantes (« caves ») dans la paroi du sondage.

La détection des fractures f s'effectue avec des ondes ultra-soniques susceptibles de bien se réfléchir et telles qu'elles ne soient pas trop atténuées par la traversée du tampon d'eau ou plus généralement de l'élément intermédiaire d'épaisseur e.

D'excellents résultats sont obtenus en utilisant des ondes acoustiques ayant une fréquence comprise entre 400 kHz et 5 MHz, l'épaisseur e du tampon d'eau pouvant être choisie, selon la valeur de cette fréquence, entre 1 millimètre et quelques centimètres, l'atténuation du signal émis augmentant évidemment avec la fréquence choisie.

La sonde étant placée dans une position donnée à un niveau connu du sondage, le transducteur émet à travers le tampon d'élément intermédiaire un signal qui fait écho et lui revient si la formation est compacte (figure 3A) et qui ne lui est pas renvoyé si la zone est fracturée (figure 3B).

Dans le premier cas, le signal émis E revient en échos A1 et A2, tel que OA1 = A1A2 = temps d'aller-retour dans le tampon d'eau.

Si la paroi du sondage est alvéolée, il peut y avoir des échos A'1, A'2... au-delà de la fenêtre F1 (figure 3C). L'un des échos peut éventuellement apparaître dans la fenêtre F2.

Cette deuxième fenêtre n'est pas à priori nécessaire, cependant son utilisation présente l'avantage de compléter l'indication donnée par la fenêtre F1, les différents cas suivants pouvant alors se produire :

pas d'écho dans F1 : il y a des fractures ;
écho dans F1 : il n'y a pas de fracture, ce qui est confirmé par la présence d'un écho également dans la fenêtre F2 ;
pas d'écho dans F1, mais écho au-delà de cette fenêtre, y compris dans F2 ; alvéole au niveau considéré.

Les figures 4A, 4B et 4C montrent les signaux correspondants à ces différents cas qui sont obtenus sur l'écran d'un oscilloscope ou sur un enregistrement.

La localisation des fractures sera obtenue, soit par mesure à un niveau fixe du sondage, soit en déplaçant lentement la sonde le long de la paroi du sondage.

Dans la fenêtre choisie F1 ou F2, on intègre le signal du retour obtenu en fonction de la cote de mesure avec une constante de temps d'autant plus courte qu'on voudra augmenter la résolution de la mesure, l'épaisseur des fractures pouvant varier de quelques dizaines de micromètres (fissures) à quelques millimètres.

Lors de la mise en œuvre de l'invention, on utilisera au moins la fenêtre F1 définissant un intervalle de temps limité qui débute lorsque s'est écoulée depuis l'instant d'émission du signal E une durée sensiblement égale à la durée du trajet aller et retour des signaux ultra-soniques à travers l'épaisseur e du milieu intermédiaire séparant le transducteur T de la paroi 5.

L'interprétation des diagraphies obtenues est améliorée, comme indiqué ci-dessus, en détectant la réception éventuelle de signaux ultra-soniques réfléchis pendant au moins un intervalle de temps limité supplémentaire, ou fenêtre, telle que F2, qui débute lorsque s'est écoulée depuis l'instant d'émission, une durée sensiblement égale à deux fois, ou plus généralement à un multiple de la durée du trajet aller et retour des signaux ultrasoniques à travers ladite épaisseur e de valeur connue du milieu intermédiaire.

Sur la figure 5 représentant schématiquement les circuits d'émission, de réception et de traitement des signaux, la partie inférieure du dessin illustre les circuits d'émission et de réception de signaux acoustiques situés à l'intérieur de la sonde 1 et la partie supérieure de la figure représente les circuits de traitements des signaux électriques, ces circuits de traitement étant de préférence situés à la surface du sol en étant reliés aux précédents par des conducteurs électriques de transmission 15, qui peuvent être incorporés au câble 2 soutenant la sonde.

On a supposé à titre d'exemple que la sonde comporte trois transducteurs T1, T2 et T3 pouvant être (ou non) répartis dans un même plan horizontal autour de la sonde (par exemple espacés de 120° dans ce plan).

Un organe électronique de commutation 16 relié électriquement aux trois transducteurs par les conducteurs $7_1$, $7_2$ et $7_3$ respectivement et alimenté par un courant électrique de basse fréquence (40 Hz par exemple) à partir de circuits logiques de fond 17, connecte successivement les transducteurs T1, T2 et T3 à un circuit 18 de commande de l'émission ultra-sonique, ce circuit étant alimenté en courant électrique de fréquence élevée (10 kHz par exemple) à partir des circuits logiques 17.

Le circuit de commutation 16 est également relié à un circuit de réception 19, ce dernier recevant les signaux électriques produits par les transducteurs à la réception d'échos acoustiques correspondant aux signaux ultra-soniques E émis.

Les signaux électriques sortant du circuit 19 sont appliqués à un circuit d'amplification 20 à gain programmable qui filtre également ces signaux. Ce circuit est accordé sur la fréquence de l'élément émetteur T, par exemple sur une fréquence de l'ordre de 2,5 MHz et alimenté en courant de fréquence 10 kHz par les circuits logiques 17.

Les signaux électriques émanant du circuit 20 sont transmis à un circuit échantillonneur-redresseur 21 et, de là, à un amplificateur de sortie 22 connecté aux conducteurs électriques 15 assurant la transmission en surface des signaux électriques de synchronisation produits par les circuits logiques de fond 17 ainsi que de signaux électriques correspondant à l'émission et à la réception de signaux acoustiques par les transducteurs T1, T2 et T3.

Les signaux électriques reçus en surface traversent un amplificateur 23.

La sortie de cet amplificateur est connectée à un premier circuit à seuil 24 qui est connecté par le conducteur 25 à un circuit 26 déterminant la valeur moyenne du signal reçu dans l'intervalle de temps correspondant à la fenêtre F1 pour chacun des trois transducteurs T1, T2 et T3 respectivement.

Les circuits de détermination de la fenêtre F1 comprennent un circuit de synchronisation 27 dont l'entrée est reliée à la sortie de l'amplificateur 23 et dont la sortie est reliée d'une part au circuit 26 par le conducteur 28, d'autre part à l'entrée d'un circuit 29 de génération des fenêtres F1 et F2, la sortie de ce circuit 29 étant reliée au circuit 26 par le conducteur 30.

A leur sortie du premier circuit à seuil 24, les signaux sont également appliqués à un oscilloscope 31 par l'intermédiaire du conducteur 32. L'oscilloscope 31 est connecté par le conducteur 33 au circuit 29 définissant la fenêtre temporelle F1 et au circuit de synchronisation 27.

Les signaux sortant du premier circuit à seuil 24 sont également appliqués par l'intermédiaire du conducteur 34 à un second circuit à seuil 35 dont les signaux de sortie sont appliqués à un oscilloscope 37 qui est relié par le conducteur 38 au circuit 29 définissant la fenêtre temporelle F2.

Les signaux de sortie du second circuit à seuil 35 sont également appliqués par l'intermédiaire du conducteur 36 à un circuit 39 déterminant la valeur moyenne du signal reçu dans l'intervalle de temps correspondant à la fenêtre F2 pour chacun des transducteurs T1, T2 et T3 respectivement, ce circuit 39 étant relié par le conducteur 40 au circuit 29 définissant la fenêtre temporelle F2.

Des conducteurs 41 et 42 connectent l'oscilloscope 37 et le circuit 39 respectivement au circuit de synchronisation 27.

La sortie de l'amplificateur 23 est également reliée à un amplificateur 43 permettant l'enregistrement des signaux sur bande magnétique et à un amplificateur 44 permettant la lecture des enregistrements magnétiques ainsi réalisés.

Bien entendu, l'appareillage comprendra des moyens pour déterminer la position de la sonde dans le puits lors de chaque mesure, ce qui permettra d'enregistrer les mesures effectuées en fonction de la profondeur. Ces moyens pourront être du type couramment utilisé pour les sondes à diagraphies connues.

Il sera éventuellement possible de fermer par une membrane l'évidement 11a contenant de l'eau ou un autre milieu intermédiaire ayant sensiblement même impédance acoustique et n'atténuant que faiblement les ondes acoustiques, à condition que cette membrane de faible épaisseur soit constituée d'un matériau de caractéristiques acoustiques telles que cette membrane n'introduise pas dans les fenêtres F1, F2... des réflexions parasites sensibles des signaux émis et réfléchis par la paroi de la formation (membrane en un matériau ayant sensiblement même impédance acoustique que l'eau, tel que le polyéthylène).

L'évidement 11a pourra aussi être rempli d'un matériau solide ayant sensiblement même impédance acoustique que l'eau.

Les circuits à seuils 24 et 35 seront ajustés de manière à éliminer des échos parasites dus à l'utilisation, entre l'élément T et la paroi 5, de matériaux dont l'impédance acoustique n'est pas rigoureusement adaptée à celle de l'eau située au contact de la paroi 5.

## Revendications

1. Méthode de détection de fractures ou d'alvéoles le long de la paroi d'un matériau ou d'une formation, dans laquelle on émet des signaux ultra-soniques formant un faisceau de faible angle d'ouverture suivant une direction sensiblement perpendiculaire à ladite paroi depuis au moins un élément d'émission écarté de celle-ci, à travers un milieu intermédiaire et on reçoit les signaux ultra-soniques réfléchis suivant cette même direction, caractérisée en ce qu'on effectue l'émission et la réception dudit faisceau de signaux ultra-soniques à proximité immédiate de la paroi, à travers une faible épaisseur (e) de valeur connue d'un milieu intermédiaire ne formant aucun interface distinct de ladite paroi qui soit capable de produire une réflexion parasite sensible des signaux ultra-soniques émis, et on détecte la réception éventuelle des signaux ultra-soniques réfléchis par la paroi sensiblement suivant la direction d'émission durant au moins un intervalle de temps limité (F1) qui débute lorsque s'est écoulée depuis l'instant d'émission des signaux ultra-soniques une durée sensiblement égale à la durée du trajet aller et retour des signaux ultra-soniques à travers ladite épaisseur du milieu intermédiaire, la réception des signaux ultra-soniques pendant ledit intervalle de détection (F1) correspondant à l'absence de fractures dans la paroi du matériau ou de la formation et le défaut de réception des signaux ultra-soniques pendant ledit intervalle de temps (F1) correspondant à la présence des fractures ou des alvéoles dans la paroi en regard du point d'émission.

2. Méthode selon la revendication 1, caractérisée en ce que l'on effectue un raclage de la paroi avant d'émettre les signaux ultra-soniques vers celle-ci.

3. Méthode selon l'une quelconque des revendications précédentes, caractérisée en ce que l'on détecte la réception éventuelle des signaux ultra-soniques réfléchis pendant au moins un intervalle de temps limité supplémentaire (F2), qui débute lorsque s'est écoulée depuis l'instant d'émission des signaux ultra-soniques une durée sensiblement égale à un multiple de la durée du trajet aller et retour des signaux ultra-soniques à travers ladite épaisseur (e) de valeur connue du milieu intermédiaire.

4. Méthode selon l'une quelconque des revendications précédentes, caractérisée en ce que l'on utilise un liquide comme milieu intermédiaire.

5. Méthode selon l'une quelconque des revendications 1 à 3, caractérisée en ce que l'on utilise comme milieu intermédiaire un liquide et une membrane, le liquide et la membrane ayant sensiblement la même impédance acoustique.

6. Méthode selon l'une des revendications 4 ou 5, caractérisée en ce que le liquide intermédiaire est de l'eau.

7. Méthode selon l'une quelconque des revendications 1 à 6, caractérisée en ce que l'on émet les signaux ultra-soniques à une fréquence comprise entre 400 kilohertz et 5 Mégahertz.

8. Appareillage pour la mise en œuvre de la méthode selon la revendication 1, ledit appareillage comprenant un corps d'outil (1) adapté à positionner, à proximité immédiate de la paroi (5) d'un matériau ou d'une formation à étudier, un transducteur (T) adapté à émettre et recevoir un faisceau de signaux acoustiques de faible angle d'ouverture suivant une même direction sensiblement perpendiculaire à ladite paroi, des moyens délimitant entre le transducteur et ladite paroi un espace (11a) ayant une faible épaisseur (e) connue et contenant un milieu intermédiaire, caractérisé en ce que ledit faisceau est un faisceau de signaux (E) ultra-soniques, en ce que ledit milieu intermédiaire ne forme aucun interface distinct de ladite paroi (5) qui soit capable de produire une réflexion parasite sensible des signaux (E) ultra-soniques émis par le transducteur, et en ce que ledit appareillage comporte en outre des moyens (27, 29) reliés audit transducteur (T) pour définir au moins un intervalle de temps limité (F1) de détection des signaux ultra-soniques reçus par ce transducteur, cet intervalle de temps débutant lorsque s'est écoulée depuis l'instant d'émission des signaux ultra-soniques par le transducteur (T) une durée sensiblement égale à la durée du trajet aller-retour des signaux ultra-soniques à travers ladite épaisseur (e) du milieu intermédiaire.

9. Appareillage selon la revendication 8, caractérisé en ce que lesdits moyens (27, 29) reliés audit transducteur (T) en outre définissent au moins un intervalle de temps limité supplémentaire (F2) de détection des signaux ultra-soniques reçus par le transducteur, cet intervalle de temps débutant lorsque s'est écoulée depuis l'instant d'émission des signaux ultra-soniques une durée sensiblement égale à un multiple de la durée du trajet aller et retour des signaux ultra-soniques à travers ladite épaisseur (e) de valeur connue du milieu intermédiaire.

10. Appareillage selon l'une quelconque des revendications 8 ou 9, caractérisé en ce que les moyens délimitant l'espace de faible épaisseur (e) comportent une bague (11) dont une face est au contact dudit transducteur (T) et dont l'autre face est appliquée contre ladite paroi (5) par des moyens élastiques, l'espace interne (11a) délimité par ladite bague (11) contenant ledit milieu intermédiaire.

## Claims

1. Method of detecting fractures or cavities in the wall of a material or a formation, into which ultrasonic signals are emitted forming a beam with small opening angle in a direction substantially perpendicular to said wall from at least one emission element spaced apart therefrom through an intermediate medium and the reflected ultrasonic signals are received in the same direction, characterized in that the ultrasonic signal beam is emitted and received in the immediate proximity of the wall, through a small thickness (e) of known value of an intermediate medium not forming a distinct interface of said wall which would be capable of producing a substantial parasite reflection of the ultrasonic signals emitted, and reception of the ultrasonic signals reflected by the wall substantially in the emission direction is detected for at least a limited time interval (F1) which begins when a time has elapsed from the time of emission of the ultrasonic signals substantially equal to the time of the outgoing and return travel of the ultrasonic signals through said thickness of the intermediate medium, reception of the ultrasonic signals during said detection interval (F1) corresponding to the absence of fractures in the wall of the material or the formation and an absence of reception of the ultrasonic signals during said time interval (F1) corresponding to the presence of fractures of cavities in the wall opposite the emission point.

2. Method according to claim 1, characterized in that the wall is scraped before emitting the ultrasonic signals thereto.

3. Method according to any one of the preceding claims characterized in that possible reception of the ultrasonic signals reflected is detected during at least an additional limited time interval (F2) which begins when a time has elapsed from the time of emission of the ultrasonic signals substantially equal to a multiple of the time for the outgoing and return travel of the ultrasonic signals through said thickness (e) of known value of the intermediate medium.

4. Method according to any one of the preceding claims, characterized in that a liquid is used as intermediate medium.

5. Method according to any one of claims 1 to 3, characterized in that a liquid and a membrane are used as intermediate medium, the liquid and the membrane having substantially the same acoustic impedance.

6. Method according to one of claims 4 or 5, characterized in that the intermediate liquid is water.

7. Method according to any one of claims 1 to 6, characterized in that the ultrasonic signals are emitted at a frequency between 400 kilohertz and 5 Megahertz.

8. Apparatus for implementing the method according to claim 1, said apparatus comprising a tool body (1) adapted for positioning, in the immediate vicinity of the wall (5) of a material or a formation to be studied, a transducer (T) adapted for emitting and receiving an acoustic signal beam of small opening angle in substantially the same direction perpendicular to said wall, means defining between the transducer and said wall a space (11a) having a small known thickness (e) and containing an intermediate medium, characterized in that said beam is an ultrasonic signal beam (E), in that said intermediate medium does not form a distinct interface of said wall (5) which would be capable of producing a substantial parasite reflection of the ultrasonic signals (E) emitted by the transducer and in that said apparatus further includes means (27, 29) connected to said transducer (T) for defining at least one limited time interval (F1) for detection of the ultrasonic signals received by this transducer, this time interval beginning when a time has elapsed from the time of emission of the ultrasonic signals by the transducer (T) substantially equal to the time for the outgoing and return travel of the ultrasonic signals through said thickness (e) of the intermediate medium.

9. Apparatus according to claim 8, characterized in that said means (27, 29) connected to said transducer (T) further define at least one additional limited time interval (F2) for detecting the ultrasonic signals received by the transducer, this time interval beginning when a time has elapsed from the time of emission of the ultrasonic signals substantially equal to a multiple of the time for the outgoing and return travel of the ultrasonic signals through said thickness (e) of known value of the intermediate medium.

10. Apparatus according to any one of claims 8 or 9, characterized in that the means defining the space of small thickness (e) include a ring (11) one face of which is in contact with said transducer (T) and the other face of which is applied against said wall (5) by resilient the internal space (11a) defined by said ring (11) containing said intermediate medium.

**Patentansprüche**

1. Verfahren zum Aufspüren von Rissen oder Zellen längs der Wandung eines Materials oder einer Formation, wobei man ein Bündel geringen Öffnungswinkels bildende Ultraschallsignale längs einer Richtung im wesentlichen senkrecht zu dieser Wandung von wenigstens einem unter Abstand hierzu angeordneten Sendeelement durch ein Zwischenmedium hindurch aussendet und die in dieser gleichen Richtung reflektierten Ultraschallsignale empfängt, dadurch gekennzeichnet, daß man Aussenden und Empfangen dieses Ultraschallsignalbündels in unmittelbarer Nähe der Wandung durch eine geringe Dicke (e) bekannten Wertes eines Zwischenmediums hindurch vornimmt, das keine sich von dieser Wandung unterscheidende Grenzfläche bildet, die in der Lage wäre, eine merkliche Störreflexion der ausgesandten Ultraschallsignale zu erzeugen und daß man den evtl. Empfang der durch die Wandung reflektierten Ultraschallsignale im wesentlichen längs der Emissionsrichtung während wenigstens eines begrenzten Zeitintervalls (F1) feststellt, welche beginnt, wenn seit dem Sendeaugenblick der Ultraschallsignale an gerechnet, eine Zeitdauer verflossen ist, die im wesentlichen gleich der Laufdauer des Hin- und Hergangs der Ultraschallsignale durch diese Dicke des Zwischenmediums ist, wobei der Empfang der Ultraschallsignale während dieses Aufspür- oder Feststellintervalls (F1) dem Fehlen von Rissen in der Wandung des Materials oder der Formation entspricht und das Fehlen eines Empfangs der Ultraschallsignale während dieses Zeitintervalls (F1) dem Vorhandensein von Rissen oder Zellen in der Wand gegenüber dem Sendeort entspricht.

2. Verfahren nach Anspruch 1, dadurch gekennzeichnet, daß ein Rakeln der Wand vorgenommen wird, bevor die Ultraschallsignale gegen diese ausgesandt werden.

3. Verfahren nach einem der vorhergehenden Ansprüche, dadurch gekennzeichnet, daß man den evtl. Empfang der reflektierten Ultraschallsignale während wenigstens eines begrenzten zusätzlichen Zeitintervalls (F2) feststellt, welches beginnt, wenn seit dem Sendeaugenblick der Ultraschallsignale eine Zeitdauer vergangen ist, die im wesentlichen gleich einem Vielfachen der Dauer des Hin- und Hergangs der Ultraschallsignale durch diese Dicke (e) bekannten Wertes des Zwischenmediums ist.

4. Verfahren nach einem der vorhergehenden Ansprüche, dadurch gekennzeichnet, daß man eine Flüssigkeit als Zwischenmedium verwendet.

5. Verfahren nach einem der Ansprüche 1 bis 3, dadurch gekennzeichnet, daß man als Zwischenmedium eine Flüssigkeit und eine Membran verwendet, wobei die Flüssigkeit und die Membran im wesentlichen die gleiche akustische Impedanz haben.

6. Verfahren nach einem der Ansprüche 4 oder 5, dadurch gekennzeichnet, daß die Zwischenflüssigkeit Wasser ist.

7. Verfahren nach einem der Ansprüche 1 bis 6, dadurch gekennzeichnet, daß man Ultraschallsignale von einer Frequenz zwischen 400 KHz und 5 MHz aussendet.

8. Vorrichtung zur Durchführung des Verfahrens nach Anspruch 1, wobei die Vorrichtung einen Werkzeugkörper (1) umfaßt, der so ausgebildet ist, daß er in unmittelbarer Nähe der Wandung (5) eines Materials oder einer zu studierenden Formation einen Transduktor (Sende-Empfängerorgan) (T) anordnet, der so ausgebildet ist, daß er ein Bündel akustischer Signale geringen Öffnungswinkels entsprechend ein und der gleichen Richtung im wesentlichen senkrecht zu dieser Wandung aussendet und empfängt, wobei Einrichtungen zwischen dem Transduktor und dieser Wandung einen Raum (11a) begrenzen, der über eine geringe bekannte Dicke (e) verfügt und ein Zwischenmedium enthält, dadurch gekennzeichnet, daß dieses Bündel ein Ultraschallsignalbündel (E) ist ; daß dieses Zwischenmedium keine sich von der Wandung (5) unterscheidende Grenzfläche bildet, die in der Lage wäre, eine merkliche Störreflexion für die Ultraschallsignale (E) zu erzeugen, die vom Transduktor ausgesandt sind und daß diese Vorrichtung im übrigen Einrichtungen (27, 29) umfaßt, die mit dem Transduktor (T) verbunden sind, um wenigstens ein begrenztes Zeitintervall (F1) zum Feststellen der vom Transduktor empfangenen Ultraschallsignale zu definieren, wobei dieses Zeitintervall beginnt, wenn seit dem Sendeaugenblick für die Ultraschallsignale vermittels des Transduktors (T) ein Zeitraum vergangen ist, der im wesentlichen gleich der Laufdauer für Hin- und Hergang der Ultraschallsignale durch diese Dicke (e) des Zwischenmediums ist.

9. Vorrichtung nach Anspruch 8, dadurch gekennzeichnet, daß diese mit dem Transduktor (T) verbundenen Einrichtungen (27, 29) im übrigen wenigstens ein begrenztes zusätzliches Zeitintervall (F2) zum Aufspüren oder Feststellen der vom Transduktor empfangenen Ultraschallsignale definieren, wobei dieses Zeitintervall beginnt, wenn seit dem Sendeaugenblick für die Ultraschallsignale eine Zeitdauer verstrichen ist, die im wesentlichen gleich einem Vielfachen der Dauer für Hin- und Hergang der Ultraschallsignale durch diese Dicke (e) bekannten Werts des Zwischenmediums ist.

10. Vorrichtung nach einem der Ansprüche 8 oder 9, dadurch gekennzeichnet, daß die den Raum geringer Dicke (e) begrenzenden Einrichtungen einen Ring (11) umfassen, von dem eine Fläche in Kontakt mit diesem Transduktor (T) steht und deren andere Fläche gegen diese Wand (5) durch elastische Einrichtungen gedrückt wird, wobei der durch diesen Ring (11) begrenzte Innenraum (11a) dieses Zwischenmedium enthält.

FIG.1

2

14

6

1

4a                4a

3b                3a

4b                4b

5

FIG.2

9

11

f

11a

7

e

T

8

10

13      12

3

5

1

FIG.4A

FIG.3A

FIG.4B

FIG.3B

FIG.4C

FIG.3C

0 116 244

FIG.5